# EUROPEAN PATENT APPLICATION

(11) **EP 3 113 005 A1**
(43) Date of publication of application: **04.01.2017**
(21) Application number: 16001261.3
(22) Date of filing: 03.06.2016
(51) Int. Cl.: G06F 3/0488, G06F 3/0481, G06F 3/0484

(54) **MOBILE TERMINAL AND METHOD FOR CONTROLLING THE SAME**

(30) Priority: 02.07.2015 KR 20150094807
(71) Applicant: LG ELECTRONICS INC., Yeongdeungpo-gu Seoul 07336 (KR)
(72) Inventor: Kwon, Yunmi, 06772 Seoul (KR); LEE, Kiseon, 06772 Seoul (KR)
(74) Representative: Beyer, Andreas

(57) **Abstract**

A mobile terminal including a touch screen configured to display screen information; and a controller configured to in response to a preset type of touch applied to the screen information designating a partial region of the displayed screen information, display an application icon of an application related to a particular object included in the designated partial region of the displayed screen information.

## Description

### CROSS-REFERENCE TO RELATED APPLICATION

### BACKGROUND OF THE DISCLOSURE

### 1. Field of the Disclosure

The present disclosure relates to a mobile terminal capable of outputting an icon of an application and a method for controlling the same.

### 2. Background of the Disclosure

Terminals can be generally classified as mobile/portable terminals or stationary terminals. Mobile terminals may also be classified as handheld terminals or vehicle mounted terminals. Mobile terminals have become increasingly more functional. Examples of such functions include data and voice communications, capturing images and video via a camera, recording audio, playing music files via a speaker system, and displaying images and video on a display.

Some mobile terminals include additional functionality which supports game playing, while other terminals are configured as multimedia players. More recently, mobile terminals have been capable to receive broadcast and multicast signals which permit viewing of content such as videos and television programs. Efforts are ongoing to support and increase the functionality of mobile terminals. Such efforts include software and hardware improvements, as well as changes and improvements in the structural components.

In addition, various programs can be installed in terminals, and information regarding a plurality of applications providing more convenience functions to users can be stored in terminals. Further, types of applications that can be applied according to situations and information items are diversified and increased. Users have many advantages and benefits through various applications, but a problem arises in that users should directly search for an application to be used according to situations or information and should go through with several steps to execute an application.

### SUMMARY OF THE DISCLOSURE

Therefore, an aspect of the detailed description is to provide a mobile terminal capable of immediately providing an execution icon of an application appropriate for a situation or information based on a specific input, and a control method thereof.

To achieve these and other advantages and in accordance with the purpose of this specification, as embodied and broadly described herein, a mobile terminal includes: a memory capable to store information of at least one application; a touch screen capable to output screen information; and a controller capable to extract object information from one region of the screen information specified based on a preset type of touch applied to the screen information, and control the touch screen to output an execution icon of an application related to the object information among the at least one application.

To achieve these and other advantages and in accordance with the purpose of this specification, as embodied and broadly described herein, a mobile terminal includes: a memory capable to store information of at least one application; a transparent touch screen capable to receive a touch input; a camera capable to capture an image of an external environment; and a controller capable to activate the camera based on a preset type of touch applied to the transparent touch screen, and specify one region corresponding to a position of a region formed based on the preset type of touch on the transparent touch screen in the captured image of the external environment obtained by the camera, wherein the controller extracts image information of an object from the one region specified in the captured image, and controls the transparent touch screen to output an execution icon of an application related to the image information of the object among the at least one application.

To achieve these and other advantages and in accordance with the purpose of this specification, as embodied and broadly described herein, a method for controlling a mobile terminal capable of executing at least one application includes: outputting screen information on a touch screen; when a preset type of touch is applied to the screen information, specifying one region of the screen information based on the preset type of touch; extracting object information from the one region of the screen information; and outputting an execution icon of an application related to the object information among the at least one application.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1A is a block diagram of a mobile terminal in accordance with the present disclosure.
FIGS. 1B and 1C are conceptual views of one example of the mobile terminal, viewed from different directions
FIG. 2A is a flow chart illustrating a method for controlling a mobile terminal according to an embodiment of the present disclosure.
FIG. 2B is a representative view illustrating a method for controlling a mobile terminal according to an embodiment of the present disclosure.
FIGS. 3A, 3B, and 3C are views illustrating embodiments according to output states of a touch screen in relation to the control method of the present disclosure.
FIGS. 4A and 4B are views illustrating embodiments related to an object specified according to a preset type of touch in the same screen information.
FIGS. 5A, 5B, and 5C are views illustrating embodiments related to a case in which a single object is included in a region of screen information.
FIGS. 6A an 6B are views illustrating embodiments related to specifying at least a portion of a plurality of objects included in a region of screen information.
FIGS. 7A, 7B, and 7C are views illustrating embodiments related to a case in which an execution icon of an application on the premise of performing a preset authentication function is output.
FIGS. 8A and 8B are views illustrating embodiments related to selectively outputting an execution icon of an application related to object information.
FIGS. 9A and 9B are views illustrating embodiments related to execution of an application related to an object by using extracted object information.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components can be provided with the same or similar reference numbers, and description thereof will not be repeated. In general, a suffix such as "module" and "unit" can be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. can be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein can be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

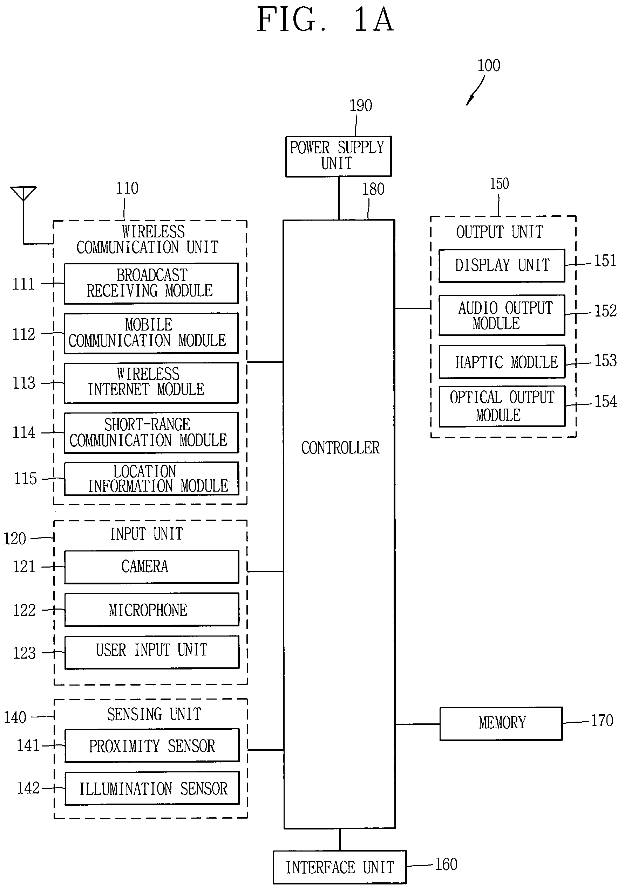

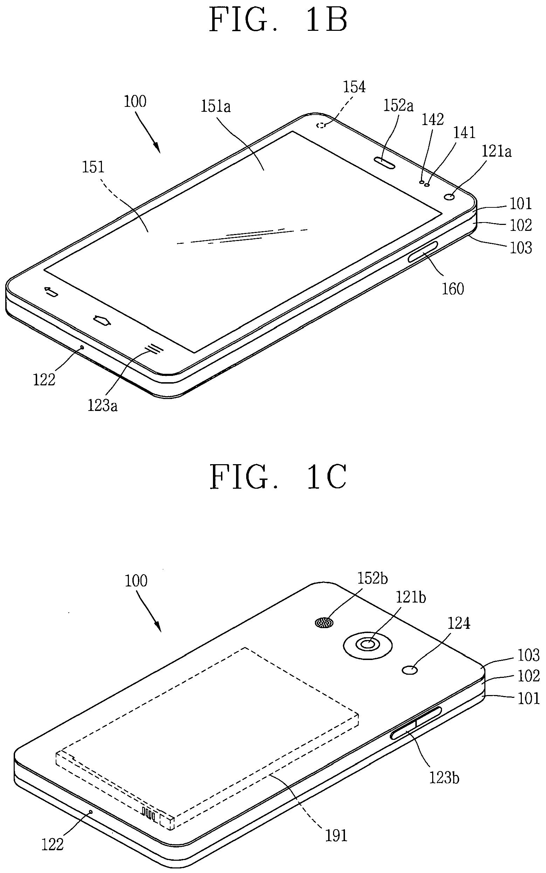

Reference is now made to FIGS. 1A to 1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 121, which is one type of audio input device for inputting an audio signal, and a user input unit 122 (for example, a touch key, a push key, a mechanical key, a soft key, and the like) for allowing a user to input information. Data (for example, audio, video, image, and the like) is obtained by the input unit 120 and can be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 121, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 can be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 122 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 can be configured to store application programs executed in the mobile terminal 100, data or instructions for operations of the mobile terminal 100, and the like. Some of these application programs can be downloaded from an external server via wireless communication. Other application programs can be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1, or activating application programs stored in the memory 170. As one example, the controller 180 controls some or all of the components illustrated in FIG. 1 according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery can be configured to be embedded in the terminal body, or configured to be detachable from the terminal body.

At least some of the above components may operate in a cooperating manner, so as to implement an operation or a control method for a glass type terminal according to various embodiments to be explained later. The operation or the control method for the glass type terminal can be implemented on the glass type terminal by driving at least one application program stored in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 can be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module can be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which can be configured similarly to mobile terminal 100) can be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal can be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 can be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 can be arranged in a matrix configuration to permit a plurality of images having various angles or focal points to be input to the mobile terminal 100. As another example, the cameras 121 can be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input can be a virtual key or a soft key, which is displayed on a touch screen through software processing, or a touch key which is located on the mobile terminal at a location that is other than the touch screen. Further, the virtual key or the visual key can be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 can be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 can be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor can be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals can be transmitted to a touch controller. The touch controller may process the received signals, and then transmit corresponding data to the controller 180. Accordingly, the controller 180 can sense which region of the display unit 151 has been touched. Here, the touch controller can be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input can be decided based on a current operating state of the mobile terminal 100 or a currently executed application program, for example.

The touch sensor and the proximity sensor can be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor can be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source can be calculated using this fact. For instance, the position of the wave generation source can be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor can be laminated on, or overlapped with, the display device. The photo sensor can be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 can be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data can be obtained from any of a number of different sources, such that the audio data can be received from the wireless communication unit 110 or may have been stored in the memory 170. The audio data can be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 can be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 can be implemented so the mobile terminal emits monochromatic light or light with a plurality of colors. The signal output can be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module can be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port can be configured as one example of the interface unit 160 to which an external charger for supplying power to recharge the battery is electrically connected. As another example, the power supply unit 190 can be configured to recharge the battery in a wireless manner without use of the connection port.

In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein can be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case can be additionally positioned between the front case 101 and the rear case 102.

The display unit 151 is shown located on the front side of the terminal body to output information. As illustrated, a window 151a of the display unit 151 can be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover can be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 can be formed by injection-molding synthetic resin or can be formed of a metal, for example, stainless steel (STS), aluminum (Al), titanium (Ti), or the like. As an alternative to the example in which the plurality of cases form an inner space for accommodating components, the mobile terminal 100 can be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant disclosure. Some components can be omitted or rearranged. For example, the first manipulation unit 123a can be located on another surface of the terminal body, and the second audio output module 152b can be located on the side surface of the terminal body.

The display unit 151 outputs information processed in the mobile terminal 100. The display unit 151 can be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 can be implemented using two display devices, which can implement the same or different display technology. For instance, a plurality of the display units 151 can be arranged on one side, either spaced apart from each other, or these devices can be integrated, or these devices can be arranged on different surfaces.

The display unit 151 may also include a touch sensor which senses a touch input received at the display unit. When a touch is input to the display unit 151, the touch sensor can be configured to sense this touch and the controller 180, for example, may generate a control command or other signal corresponding to the touch. The content which is input in the touching manner can be a text or numerical value, or a menu item which can be indicated or designated in various modes.

The touch sensor can be configured in a form of a film having a touch pattern, disposed between the window 151a and a display on a rear surface of the window 151a, or a metal wire which is patterned directly on the rear surface of the window 151a. Alternatively, the touch sensor can be integrally formed with the display. For example, the touch sensor can be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a can be implemented in the form of a speaker to output voice audio, alarm sounds, multimedia audio reproduction, and the like. The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which can be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b can be used in various ways. For example, the first manipulation unit 123a can be used by the user to provide an input to a menu, home key, cancel, search, or the like, and the second manipulation unit 123b can be used by the user to provide an input to control a volume level being output from the first or second audio output modules 152a or 152b, to switch to a touch recognition mode of the display unit 151, or the like.

As another example of the user input unit 123, a rear input unit can be located on the rear surface of the terminal body. The rear input unit can be manipulated by a user to provide input to the mobile terminal 100. The input can be used in a variety of different ways. For example, the rear input unit can be used by the user to provide an input for power on/off, start, end, scroll, control volume level being output from the first or second audio output modules 152a or 152b, switch to a touch recognition mode of the display unit 151, and the like. The rear input unit can be configured to permit touch input, a push input, or combinations thereof.

The rear input unit can be located to overlap the display unit 151 of the front side in a thickness direction of the terminal body. As one example, the rear input unit can be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123. The microphone 122 is shown located at an end of the mobile terminal 100, but other locations are possible. If desired, multiple microphones can be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 can be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras can be referred to as an "array camera." When the second camera 121b is implemented as an array camera, images can be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and can be also used for implementing a speaker phone mode for call communication.

At least one antenna for wireless communication can be located on the terminal body. The antenna can be installed in the terminal body or formed by the case. For example, an antenna which configures a part of the broadcast receiving module 111 can be retractable into the terminal body. Alternatively, an antenna can be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging can be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 can be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 can be provided. The cover or pouch may cooperate with the display unit 151 to extend the function of the mobile terminal 100. Another example of the accessory is a touch pen for assisting or extending a touch input to a touch screen.

Based on a preset type of touch applied to screen information output on a touch screen, a mobile terminal according to an embodiment of the present disclosure may extract object information corresponding to an object selected by a user and immediately provide an execution icon of an application related to the object information.

Thus, the user can be provided with convenience of quickly and easily executing the application related to the object information by simply applying a preset type of touch to the screen information, regardless of type of screen information output on the touch screen, without a process of directly searching for an application related to a desired object.

Hereinafter, exemplary embodiments related to a control method that can be implemented in the mobile terminal configured as described above will be described with reference to the accompanying drawings. It will be apparent to those skilled in the art that modifications and variations can be made without departing from the spirit and scope of the invention.

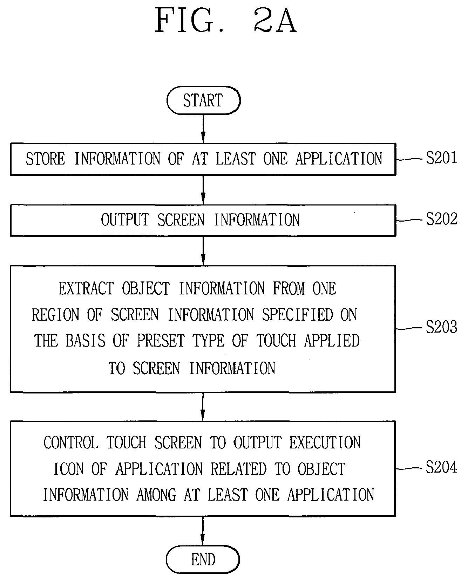

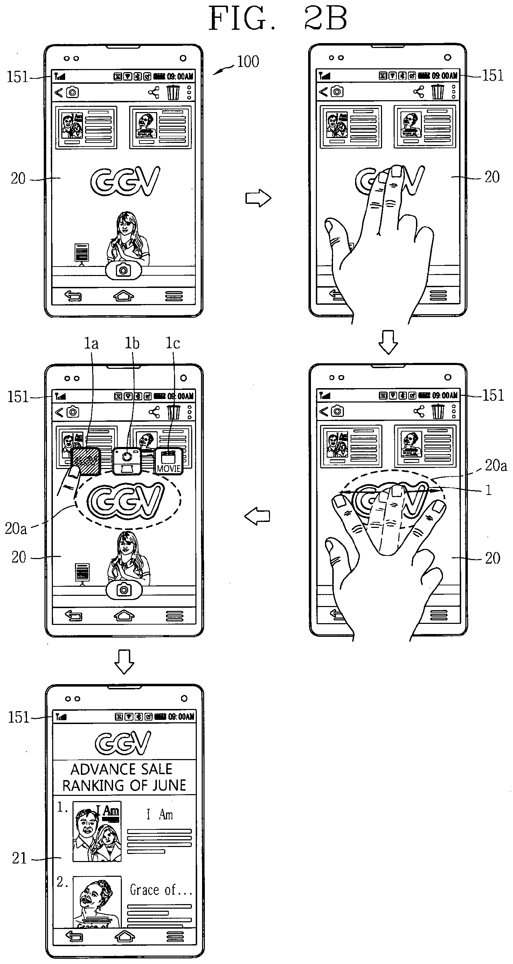

FIG. 2A is a flow chart illustrating a method for controlling a mobile terminal according to an embodiment of the present disclosure, and FIG. 2B is a representative view illustrating a method for controlling a mobile terminal according to an embodiment of the present disclosure. First, referring to FIG. 2A, the memory 170 of the mobile terminal stores information regarding at least one application that can be executed in the mobile terminal 100 (S201).

In more detail, the information regarding at least one application can be function information of the at least one application. For example, program information corresponding to each of at least one application, information of a control command for executing each of the at least one application, and operation information according to the control command, and the like, can be stored in the memory 170.

Also, execution information of the at least one application can be stored in the memory 170. That is, the memory 170 can store execution information regarding execution of the at least one application such as frequency in execution of the at least one application, the number of times of execution of the at least one application, or whether the at least one application has been recently executed.

Also, the touch screen 151 outputs screen information (S202), which may include any type of screen information that can be displayed on the touch screen 151. For example, the screen information can be an execution screen of a specific application, a home page screen, a lock screen limiting reception of a control command, and the like. That is, as illustrated in the first drawing of FIG. 2B, a preview image 20 captured by the camera 121 can be output on the touch screen 151.

Thus, when the screen information is output, the controller 180 can extract object information from a region of specified screen information based on a preset type of touch applied to the screen information (S203). The preset type of touch can be a touch specifying a region of the screen information. In more detail, the preset type of touch may include a first touch and a second touch, and can be defined by various combinations of the first and second touches. For example, the preset type of touch can be defined by the second touch applied when the first touch is maintained, or by the second touch applied in continuation to the first touch. Also, the preset type of touch can be defined by a combination of the first and second touches which are applied substantially at the same time or by a combination of a first touch and a second touch applied after the lapse of a preset period of time from the application of the first touch.

In more detail, for example, the preset type of touch can be defined as a combination of a first touch applied by two fingers to one point of the touch screen and a second touch as a drag input applied by opening the two fingers in different directions when the first touch is not released. That is, as illustrated in the second drawing of FIG. 2B, when the preview screen 20 is output, a first touch can be applied by two fingers to one point on the preview image 20. Also, as illustrated in the third drawing of FIG. 2B, when the first touch applied by the two fingers is not released, a second touch applied by a gesture of opening the two fingers can be applied to the touch screen 151.

In another example, the preset type of touch can be defined as a combination of a first touch applied to one point of the screen information and a second touch applied to another point different from the one point of the screen information. Here, the first and second touches can be applied substantially at the same time or sequentially. In another example, the first touch can be a multi-touch simultaneously applied two different points of the screen information, and the second touch can be a multi-touch simultaneously applied two other points different from the foregoing two different points.

In addition, the preset type of touch can be maintained for a preset period of time such that the preset type of touch can be distinguished from a touch input applied to control the screen information. That is, at least one of the first touch and the second touch can be maintained for a preset period of time in a state of being applied to the touch screen.

For example, when a second touch is applied consecutively after the first touch and the touch applied to one point on the screen information is maintained for a preset period of time, the controller 180 can recognize that the touch applied to the one point as the first touch. In another example, when at least one of the first and second touches applied to two different points on the screen information is maintained for a preset period of time, the controller 180 can recognize the at least one touch maintained for the preset period of time as at least one of the first and second touches.

The controller 180 can specify a region formed based on points corresponding to the first and second touches on the screen information as one region of the screen information. For example, the controller 180 can specify one region of the screen information based on the points to which the first and second touches have been applied on the screen information.

In more detail, when the first and second touches, as preset types of touches, are simultaneously applied to two different points of the screen information, the controller 180 can specify a region between the two different points as one region of the screen information. Also, when the first touch is a multitouch applied to two different points and the second touch is a multitouch applied to other two points, the controller 180 can specify a region formed by positions of the four points selected by the first and second touches, as one region of the screen information.

In another example, when a first touch is applied to the screen information and a second touch is applied to the screen information consecutively after the first touch, the controller 180 can specify a point to which the first touch has been applied and a point to which the second touch has been applied and released. In this instance, based on the point to which the first touch has been applied, the controller 180 can specify a region from the point to which the first touch has been applied to the point from which the second touch has been released, as one region of the screen information.

That is, as illustrated in the third drawing of FIG. 2B, the controller 180 can specify a region 20a from the point to which the first touch has been applied to the point from which the second touch has been released, as one region 20a of the screen information. Thus, when the one region 20a of the screen information is specified, the controller 180 can output a specific visual effect (for example, the specific one region is indicated by a dotted line) such that a user can recognize the one region 20a formed according to the preset scheme.

Alternatively, the controller 180 can specify a region formed based on points from which the first and second touches have been released, as one region of the screen information. In addition, when one region of the screen information is specified, the controller 180 can extract object information from the one region of the screen information. Here the object information can be at least one of image information and text information corresponding to an object included in the one region of the screen information. Also, the object can be all objects included in the screen information such as a person, an animal, a plant, a thing, a character, and a text.

For example, referring to the third drawing of FIG. 2B, a character corresponding to a character image (GGV) 1 included in the one region 20a of the screen information is selected as the object. In this instance, the controller 180 can control the touch screen 151 to output a specific indication in the object 1 such that the object 1 can be recognized. Also, the controller 180 can extract image information corresponding to the selected object 1 from the preview screen 20.

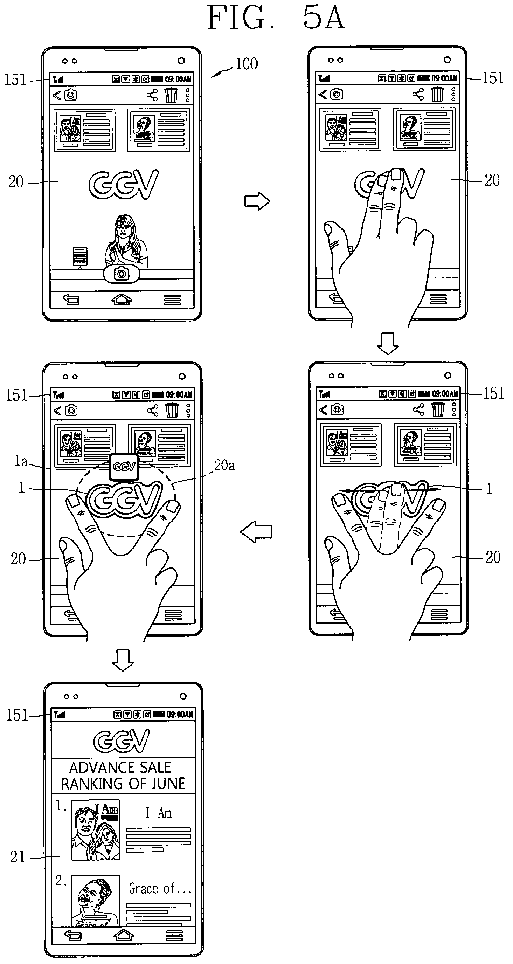

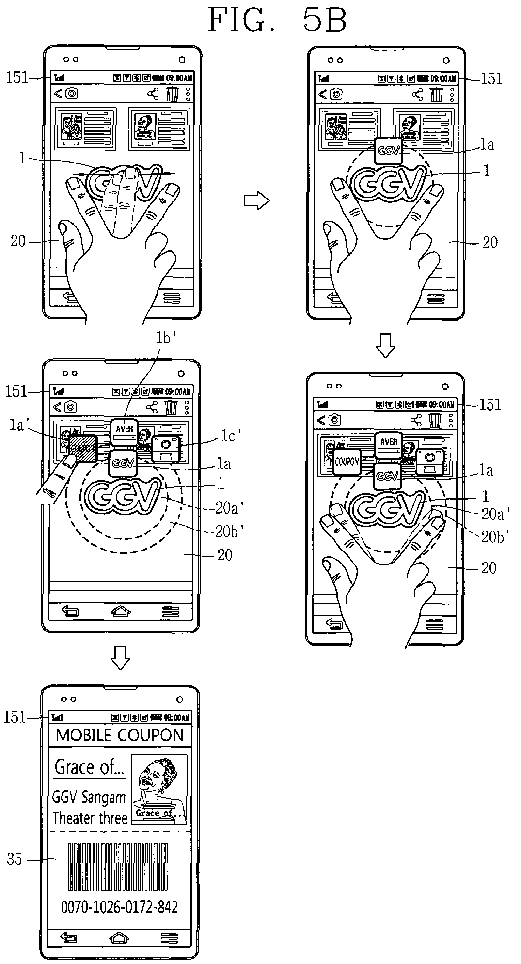

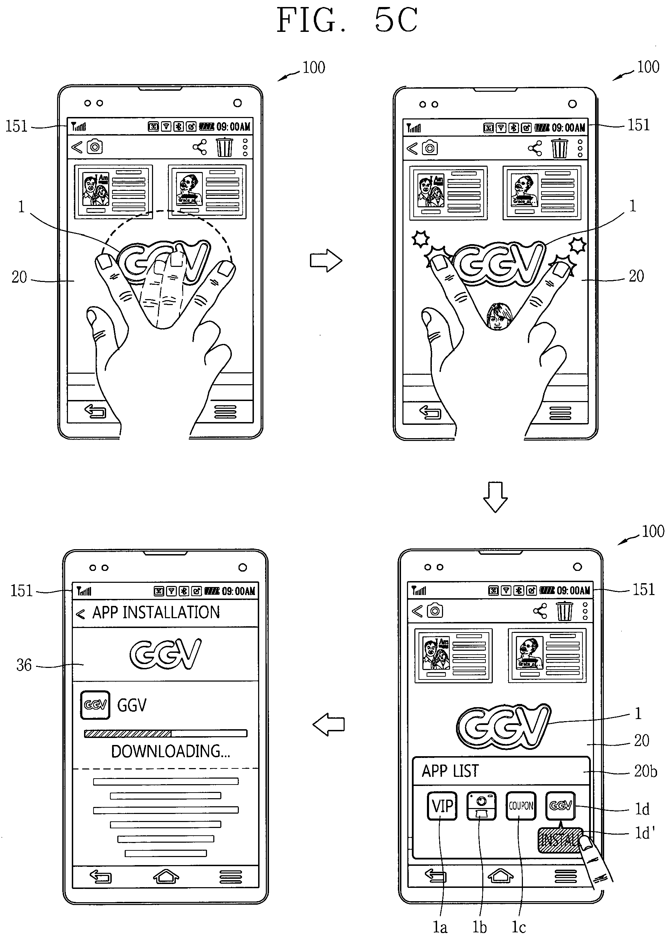

When only one object is included in the one region of the screen information, the controller 180 can directly specify the one object as well as specifying one region of the screen information. Also, the controller 180 can extract object information from the one object. This will be described hereinafter with reference to FIGS. 5A, 5B, and 5C.

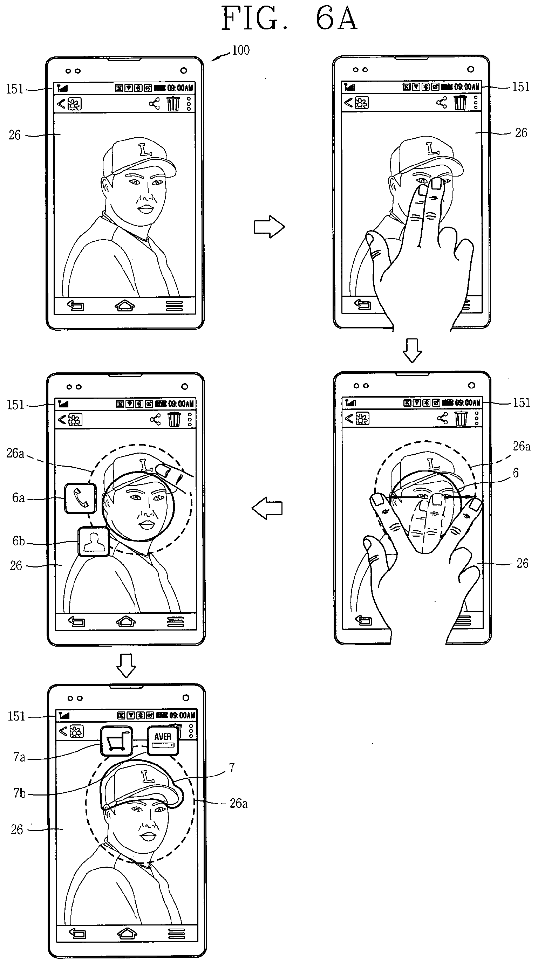

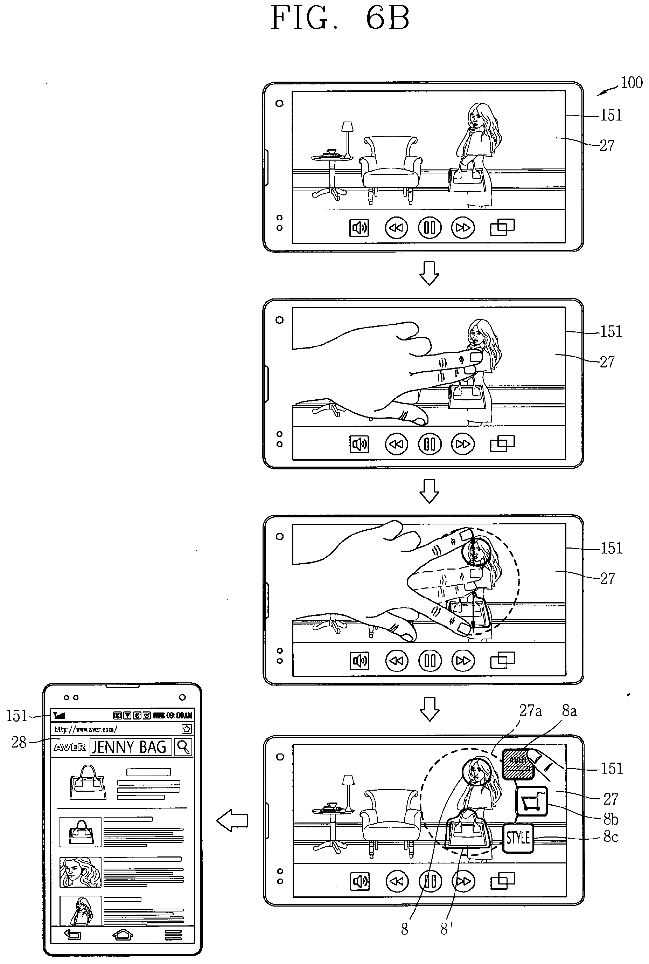

Alternatively, when a plurality of objects are included in one region of the screen information, the controller 180 can select some objects from the plurality of objects based on a preset type of touch. For example, when a plurality of objects are included in one region of the screen information, the controller 180 can select one object based on at least one position among the points to which the first touch and the second touch have been applied. An embodiment related to selecting of an object included in one region of the screen information will be described hereinafter with reference to FIGS. 6A and 6B.

Thus, when the object included in the one region of the screen information is selected, the controller 180 can extract image information or text information corresponding to the object. Also, the controller 180 can control the touch screen 151 such that an execution icon of an application related to the object information among at least one application stored in the memory 170 is output (S204).

When the object information is extracted, the controller 180 can analyze the object information and select an application related to the object information among the at least one application. For example, when image information is extracted as the object information, the controller 180 can analyze the image information. That is, the controller 180 can recognize a type, a meaning, and a source of the object corresponding to the image information through analysis of the image information.

In a specific example, when the image information is a face image of a specific person, the controller 180 can recognize the specific person corresponding to the face image through analysis of the image information. In this instance, the controller 180 can control the wireless communication unit 110 to perform wireless communication with an external server to search for the specific person. Also, the controller 180 can search for the specific person corresponding to the face image by using image information stored in the memory 170.

In another example, when the image information is image information corresponding to a character or text, the controller 180 can extract a character or text corresponding to the image information by using an optical character reader (OCR) scheme. In this instance, the controller 180 can recognize a meaning of the character or the text by performing searching by using the character or the text as a keyword.

Similarly, when the object information is text information, the controller 180 can analyze the object information by recognizing a meaning of the text corresponding to the text information. Also, the controller 180 may select an application related to the object information among the at least one application based on the analysis. Here, the application related to the object information can be an application corresponding to the type, the meaning, and the source of the object recognized through the analysis.

For example, when a specific character or text is obtained through analysis of the object information, the controller 180 can select an application corresponding to the specific character or text by using the specific character or text as a keyword. In this instance, the controller 180 can select an application having a function or attribute information corresponding to the meaning of the specific character or text.

In a specific example, as illustrated in the fourth drawing of FIG. 2B, the controller 180 can extract the character (GGV) corresponding to the image information based on analysis of the image information of the object 1. Also, the controller 180 can search for a meaning of the character (GGV) from an external server by using the wireless communication unit 110.

That is, the controller 180 can collect information regarding the character through searching. For example, the controller 180 can collect information regarding whether the character is a name of a specific company, brand, or store, whether the character designates a specific article or thing, or whether the character is an acronym of text having a specific meaning.

The controller 180 can select some of the at least one application by using the collected information. For example, when the object (the character) is a name of a specific brand, the controller 180 can select an application for searching for information related to the brand, an application for checking event information or update information of the brand, or an application for registering a discount coupon or an accumulation point related to the brand, among the at least one application.

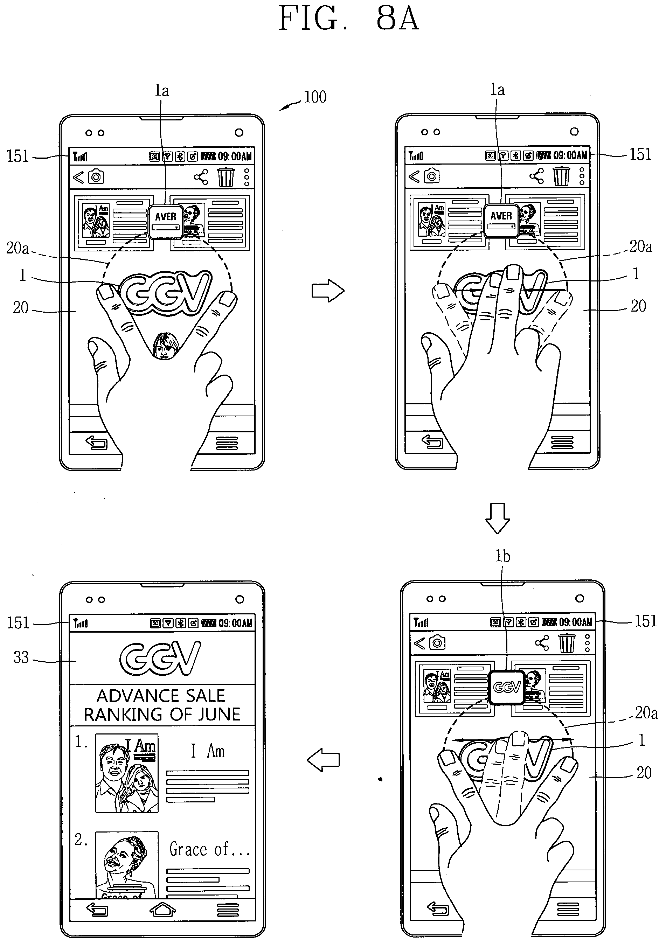

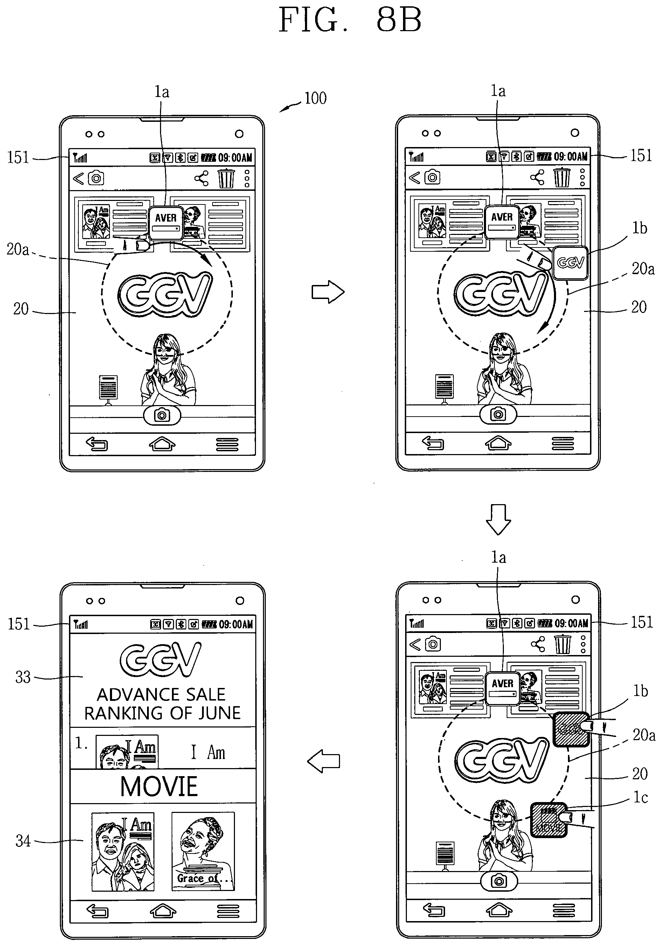

Also, when the application related to the object is in plurality, the controller 180 can set a priority regarding the applications in consideration of other conditions. Here, the other conditions may include a time or a location to which the preset type of touch is applied, or history information related to execution of the user regarding the applications. This will be described in detail with reference to FIGS. 8A and 8B hereinafter.

Thus, as illustrated in the third drawing of FIG. 2B, the controller 180 can analyze the meaning of the character (GGV) corresponding to the object 1 from the image of the specific object 1 and recognize that the character (GGV) is a name of a theater of a specific brand. The controller 180 can select an application for checking movie information on show in the theater of the specific brand, an application for booking a movie ticket, and an application for performing searching on movie information.

In another example, when it is determined that the object is a specific person through the analysis of the object information, the controller 180 can select an application for searching for the specific person. Also, the controller 180 can select an application that can be executed by using information corresponding to the specific person. For example, the controller 180 can obtain identification information of an external terminal corresponding to the specific person and transmit information to the external terminal or may select an application for uploading information in relation to the identification information corresponding to the external terminal.

Thus, when an application related to the object information is selected, the controller 180 can output an execution icon of the selected application on the touch screen 151 such that the user can immediately execute the selected application.

Here, when the preset touch is released, the controller 180 can control the touch screen 151 to output the execution icon of the application related to the object information. Also, the controller 180 can control the touch screen 151 to output the execution icon of the application related to the object information to a position adjacent to the one region of the screen information.

That is, as illustrated in the fourth drawing of FIG. 2B, the controller 180 can control the touch screen 151 to output execution icons 1a, 1b, and 1c of the application selected in relation to the object 1 to positions corresponding to the one region 20a of the screen information 20. Thereafter, as illustrated in the fourth drawing of FIG. 2B, when a user's touch is applied to any one execution icon 1a, an execution screen 21 of the application corresponding to the execution icon 1a is output on the touch screen 151.

Thus the user can easily execute various functions related to the object by selecting an object included in the screen information being currently output by using a preset type of touch. In more detail, when the user wants to execute various functions in relation to the object (that is, when the user wants to search for information regarding the object, wants to share object information corresponding to the object with an external device or a server, or wants to perform a specific function by utilizing the object information), the user can be provided with convenience of immediately executing a desired function even without a step of separately searching for an application to perform each of the various functions.

Hereinafter, a control method according to an embodiment of the present disclosure will be described by using the preset type of touch is a combination of a first touch applied by two fingers to one point of the screen information and a second touch as a drag input of opening the two fingers when the first touch is not released. However, the preset type of touch is not limited thereto. As described above, the mobile terminal 100 can extract object information from the screen information regardless of a type of screen information output on the touch screen 151.

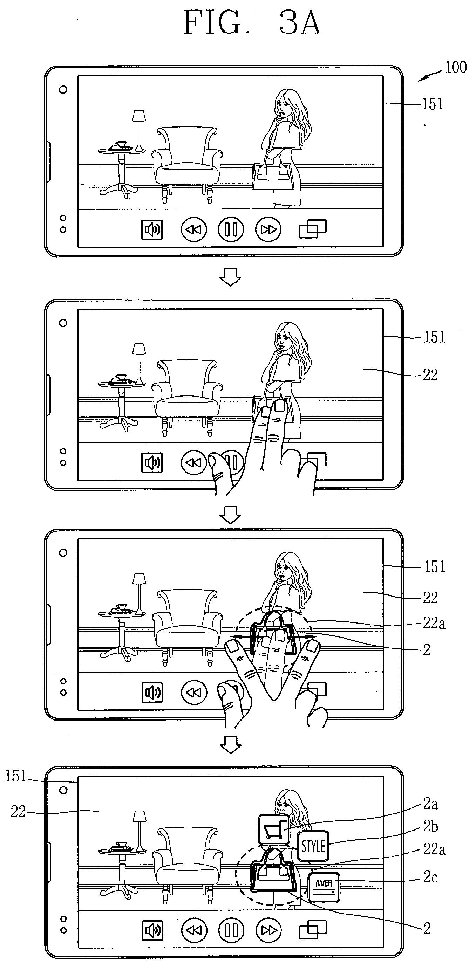

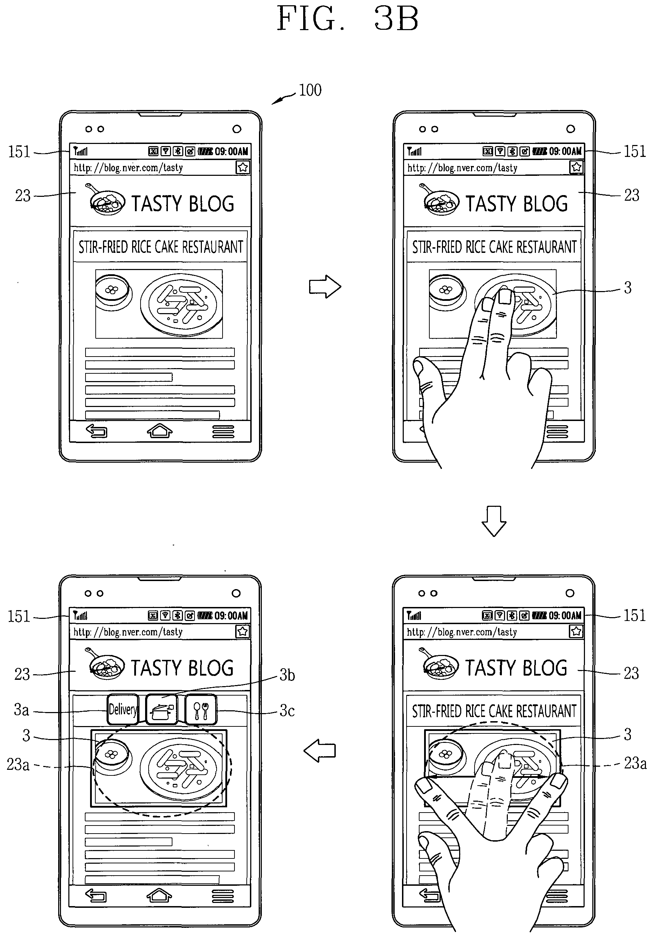

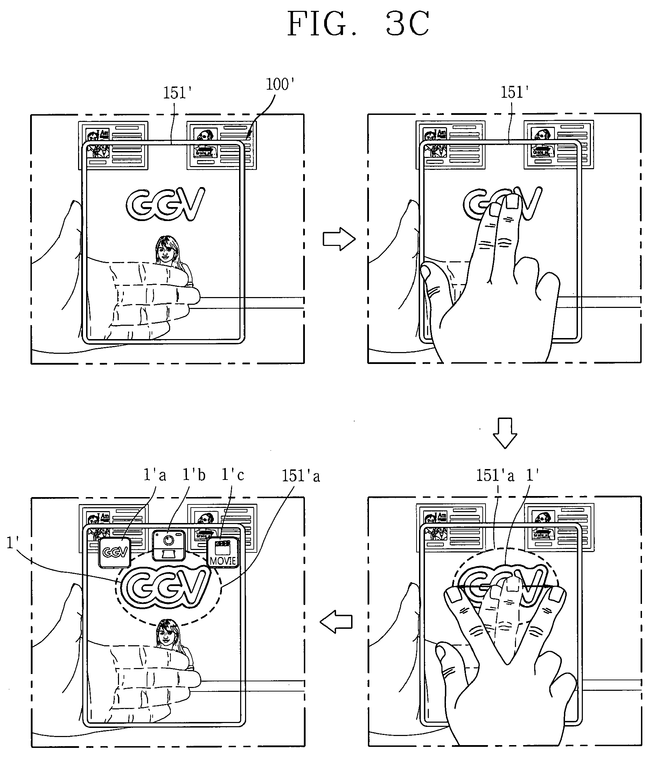

FIGS. 3A, 3B, and 3C are views illustrating embodiments according to output states of a touch screen in relation to the control method of the present disclosure. First, referring to FIG. 3A, screen information of video including continuous images according to the passage of time are output on the touch screen 151. When the screen information 22 is output, a first touch is applied by two fingers to one point of the screen information 22 as illustrated in the second drawing of FIG. 3A, and a second touch as a drag input is applied by two fingers consecutively after the first touch as illustrated in the third drawing of FIG. 3A.

In this instance, when the first touch is maintained at the one point for a preset period of time, the controller 180 can recognize that the touch applied by the two fingers is a first touch. Also, based on the second touch applied consecutively after the first touch, the controller 180 can specify a region from the one point to a point from which the second touch is released, as one region of the screen information 22.

Thus, as illustrated in the third drawing of FIG. 3A, the one region 22a of the screen information 22 is specified. Also, the controller 180 can extract object information of an object 2 included in the specified one region 22a from the screen information 22. In addition, the controller 180 can control the touch screen 151 such that the one region of the screen information 22 is specified without an error based on characteristics of video in which a currently output image is changed to an image corresponding to a next sequence according to the passage of time. That is, when the first touch is applied to the screen information 22, the controller 180 can control the touch screen 151 such that output of the image output on the touch screen 151 is maintained at a point in time at which the first touch is applied.

Thus, when the object information corresponding to the object 2 is extracted, the controller 180 can recognize a type of a thing corresponding to the object 2 through analysis of the object information. Also, the controller 180 can select an application related to the object 2. For example, when the object 2 is a specific handbag, the controller 180 can select an application for searching for a brand or a trade name of the object 2, an application for purchasing the object 2, or an application for checking a fashion or trend information using the object 2. Also, as illustrated in the fourth drawing of FIG. 3A, the controller 180 can control the touch screen 151 to output execution icons 2a, 2b, and 2c of the application selected in relation to the object.

In addition, as illustrated in the first drawing of FIG. 3A, screen information 23 of a Web browsing can be output on the touch screen 151. Also, when a first touch is applied to one point of the screen information 23 as illustrated in the second drawing of FIG. 3B, a second touch can be applied consecutively after the first touch as illustrated in the third drawing of FIG. 3B. In this instance, the controller 180 can specify a region formed by the first and second touches, as one region 23a of the screen information 23.

Also, after the object 3 included in the one region 23a of the screen information 23 is specified, object information corresponding to the object 3 can be extracted. The controller 180 can analyze the object information to determine whether the object corresponding to the object information is a thing or a person, and if the object is a thing, what kind of a thing it is, to thus recognize a type of the object.

Also, when the screen information output on the touch screen 151 is a Web browsing screen including a plurality of pieces of visual information, the controller 180 can analyze the extracted object information by using the Web browsing screen. That is, the controller 180 can recognize a type of the object by using the pieces of information included in the currently output screen without searching for an external server or a memory. Thus, as illustrated in the third drawing of FIG. 3B, the controller 180 can recognize that the object corresponding to the extracted object information is specific food based on the pieces of information included in the screen information 23.

Also, in relation to the recognized object, the controller 180 can select an application for ordering the specific food, an application for searching for a method for cooking the specific food, an application for providing information regarding a restaurant for having the specific food, among the at least one application. In this instance, the controller 180 can consider information such as a time or a location to which the preset type of touch has been applied. For example, when a time to which the preset type of touch has been applied is a late night, the controller 180 can preferentially select an application for ordering the specific food among the at least one application.

Thus, when an application related to the object is selected, the controller 180 can control the touch screen 151 to output execution icons 3a, 3b, and 3c of the selected application on the screen information 23 of the Web browsing as illustrated in the fourth drawing of FIG. 3B.

That is, when the user selects a specific object in which the user is interested regardless of the screen information output on the touch screen 151, a function related to the specific object can be quickly and easily executed. Also, types of the execution icons can be varied according to a time or a location to which the preset type of touch for selecting the specific object is applied or a type of screen information output on the touch screen 151. Thus, the user can be provided with an execution icon corresponding to a function corresponding to his or her intention in relation to the specific object.

In addition, even though the touch screen 151 of the mobile terminal according to an embodiment of the present disclosure is in a deactivated state in which screen information is not output thereon, if a specific touch screen is provided, the control method according to an embodiment of the present disclosure can be applied.

In this connection, referring to the first drawing of FIG. 3C, a mobile terminal 100' according to an embodiment of the present disclosure may include a transparent touch screen 151' which is formed of a transparent material and which can receive a touch input. When screen information is output, the transparent touch screen 151' can project an external environment positioned on a rear surface of the mobile terminal 100'.

Here, as illustrated in the second drawing of FIG. 3C, a first touch can be applied to one point of the transparent touch screen 151'. When the touch applied to one point is maintained for a preset period of time, the controller 180 can determine that the touch applied to the one point is a first touch, and activate the camera. Thus, the camera activated based on the first touch can capture images of a surrounding environment positioned in the rear of the mobile terminal 100'.

Thereafter, as illustrated in the third drawing of FIG. 3C, when the second touch is applied consecutively after the first touch which has been applied to the one point, the controller 180 can specify a region formed based on the first and second touches on the transparent touch screen 151'. Also, the controller 180 can specify one region corresponding to the specific region in an image of the external environment captured by the activated camera.

In other words, the controller 180 can determine that the preset type of touch applied to the transparent touch screen 151' can be a selective input of an object included in the external environment projected through the transparent touch screen 151'. Also, in order to obtain information of the object included in the external environment, the controller 180 can analyze the captured image of the external environment at a position of the mobile terminal 100'.

In more detail, the controller 180 can specify one region of a position corresponding to a position of the region formed based on the preset type of touch on the transparent touch screen 151'. Also, the controller 180 can specify an object included in the one region specified in the captured image.

The controller 180 can control the transparent touch screen 151' to output the specified object 1' and an indication regarding the formed region 151'a. If the transparent touch screen 151' is in a deactivated state with lighting turned off, the controller 180 can activate at least a portion of the transparent touch screen 151' based on the specifying of the region formed according to the preset type of touch and the object included in the region.

Also, the controller 180 can extract image information of the specified object 1' from the captured image and search for an application related to the specified object 1' based on analysis of the image information. Thereafter, when the preset type of touch is released, as illustrated in the fourth drawing of FIG. 3C, the execution icons 1'a, 1'b, and 1'c of the application related to the specified object 1' are displayed on the transparent screen 151'.

The controller 180 can control the transparent touch screen 151' to output the execution icons 1'a, 1'b, and 1'c of the application related to the specified object 1' at a position corresponding to the specified region 151'a on the transparent touch screen 151'. Thus, the user can be provided with the execution icons through the region adjacent to the object selected from the external environment projected to the transparent touch screen 151'.

Further, the controller 180 can output an image captured by the camera on the transparent touch screen 151' based on the preset type of touch applied to the transparent touch screen 151'. In this instance, an effect that the user selects an object desired by the user more accurately from the captured image.

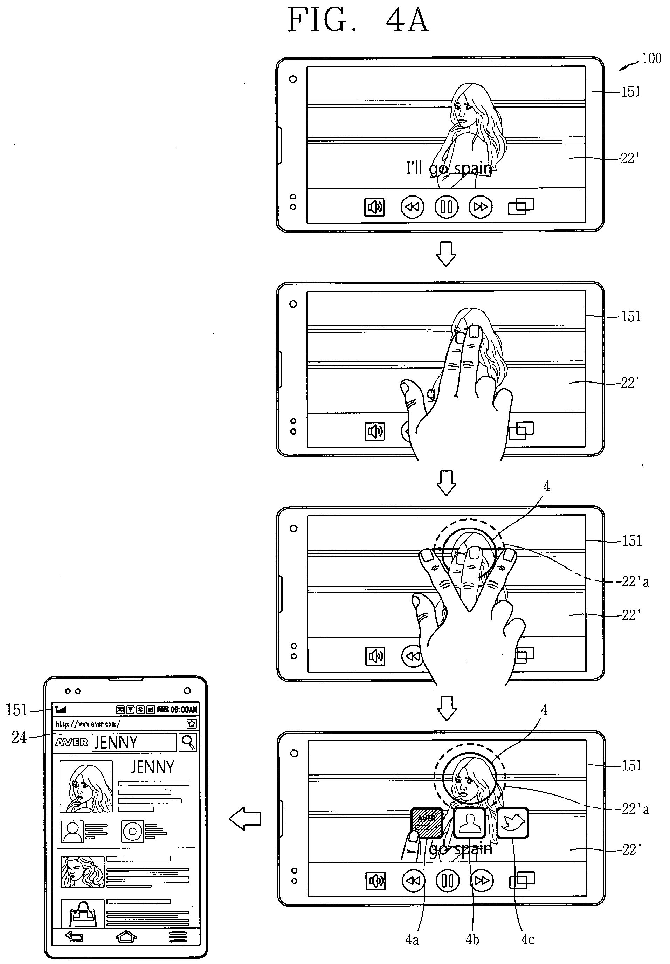

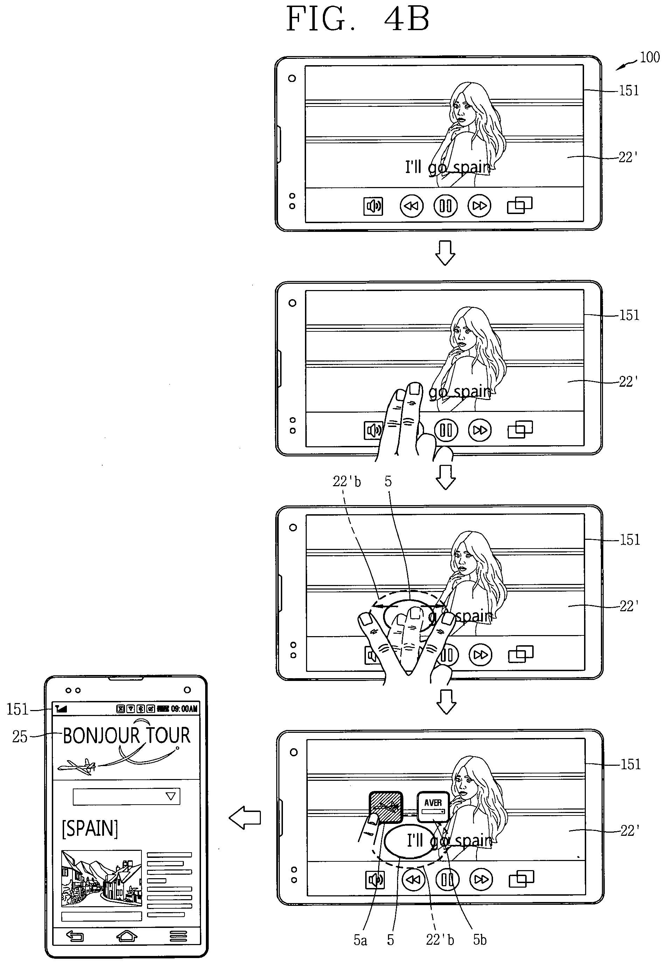

Hereinafter, an embodiment related to specifying an object included in one region of the screen information will be described. FIGS. 4A and 4B are views illustrating embodiments related to an object specified according to a preset type of touch in the same screen information.

First, referring to FIG. 4A, screen information 22' of video can be output on the touch screen 151. Here, as illustrated in the second drawing of FIG. 4A, a first touch can be applied to one point of the screen information 22', and as illustrated in the third drawing of FIG. 4A, a second touch can be applied consecutively after the first touch. In response thereto, the controller 180 can specify a region 22'a formed based on the one point of the screen information 22' and a point from which the second touch is released, as one region of the screen information 22'.

Also, the controller 180 can extract image information of an object corresponding to an object 4 included in the one region 22'a of the screen information 22'. Further, the controller 180 can analyze the extracted image information of the object 4 and determine that the object 4 is a person.

In order to recognize a specific person corresponding to the image information of the object 4, the controller 180 can analyze a face image corresponding to the image information and collect pieces of information related thereto. For example, when information of the specific person corresponding to the face image of the object 4 has been stored in the mobile terminal 100, a related application (for example, an application capable of performing a function of a messenger with a terminal corresponding to the specific person) can be selected. Alternatively, when the information of the specific person has not been stored, the controller 180 can search for the specific person through the external server or select an application capable of checking information related to the specific person.

Thus, as illustrated in the fourth drawing of FIG. 4A, execution icons 4a, 4b, and 4c of an application selected by the controller 180 can be output on the touch screen 151. Here, as illustrated in the fourth drawing of FIG. 4A, when one execution icon 4a is selected by the user, the controller 180 can control the touch screen 151 to output an execution screen 24 of the application corresponding to the execution icon 41 as illustrated in the fifth drawing of FIG. 4A.

Also, when information of the specific person corresponding to the object 4 is obtained based on an analysis of the image information of the object 4, the controller 180 can use the information of the specific person in executing an application corresponding to an execution icon selected by the user. For example, as illustrated in the fifth drawing of FIG. 4A, when an application of searching for the specific person corresponding to the object 4 is executed, the controller 180 can include the information of the specific person in the execution screen 24 of the application and output the information.

In addition, referring to FIG. 4B, when the screen information 22' the same as that of FIG. 4A is output on the touch screen 151, a preset type of touch can be applied to a point different from the one point as illustrated in the second drawing of FIG. 4B. In response thereto, the controller 180 can specify one region of the screen information based on the different point as illustrated in the third drawing of FIG. 4B.

And, the controller 180 can extract object information from the specified one region 22'b of the screen information. As illustrated in the third drawing of FIG. 4B, the object information can be image information corresponding to a specific character 5. In this instance, the controller 180 can extract the specific character corresponding to the image information by using an optical character reader (OCR) scheme.

Also, the controller 180 can recognize a type and a meaning of the specific character 5. For example, as illustrated in FIG. 4B, when the specific character 5 is recognized as a country name, the controller 180 can select an application for search for information regarding the country or an application for searching for travel information related to the country.

Thus, as illustrated in the fourth drawing of FIG. 4B, execution icons 5a and 5b of the application related to the object 5 can be output, and based on a touch applied to the one execution icon 5a, an execution screen 25 of travel information application can be output on the touch screen 51 as illustrated in the fifth drawing of FIG. 4B. As illustrated in FIG. 4B, the controller 180 can include the information (country name) obtained in relation to the specific object in the execution screen 25 of the application and output the information.

Thus, the user can specify different objects by applying the preset type of touch to different points in spite of the same screen information. Also, an execution screen of a specific function (for example, when a search function is performed by using object information as a search word) in relation to object information analyzed by the controller 180 can be output on the touch screen 151. Thus, when the execution screen of the application is output, the user can be directly provided with screen information desired by the user even without a separate input for performing a function related to the object.

In addition, at least one object can be included in one region of the screen information. The controller 180 can perform control differently according to the number of objects included in one region. That is, when only one object is included in one region of the screen information, the controller 180 can immediately specify the one object when specifying the one region of the screen information, and extract object information. Alternatively, when a plurality of objects are included in one region of the screen information, the controller 180 can perform controlling such as selecting only one object or selecting a plurality of objects based on the first touch or the second touch. Hereinafter, a related embodiment will be described.

Next, FIGS. 5A, 5B, and 5C are views illustrating embodiments related to when a single object is included in a region of screen information. First, referring to FIG. 5A, when a preview screen 20 captured by the camera 121 is output on the touch screen 151, a first touch can be applied to the screen information 20 as illustrated in the second drawing of FIG. 5A. Also, as illustrated in the third drawing of FIG. 5A, a second touch can be applied consecutively after the first touch. The controller 180 can specify one region 20a of the screen information 20 based on the first touch and the second touch as illustrated in the fourth drawing of FIG. 5A.

Also, when one object is included in the one region 20a of the screen information 20, the controller 180 can specify the one object as well as specifying the one region 20a. And, as illustrated in the fourth drawing of FIG. 5A, the controller 180 can control the touch screen 151 to output an icon 1a of an application selected by using object information extracted from the one object based on the application of the second touch.

The controller 180 can control the touch screen 151 to output only one icon of the application related to the object specified based on a user setting or execution information of the user stored in relation to the at least one application. Also, when an icon of one application is output, the controller 180 can control the touch screen 151 to output an execution screen 21 corresponding to the icon 1a of the application based on releasing of the second touch as illustrated in the fifth drawing of FIG. 5A.

Thus, when only one object is included in one region of the screen information, the controller 180 can control the touch screen 151 to immediately output an icon of the application related to the object based on the application of the second touch. Also, when only one icon is output, since an execution screen is immediately output based on the releasing of the second touch, the user can be immediately provided with an execution screen of a desired function through only the preset type of touch one time.

Also, when an icon of one application related to the object information is output, the controller 180 can additionally provide an icon of an application related to the icon of the one application based on a length of a touch applied consecutively after the second touch. That is, as illustrated in the second drawing of FIG. 5B, when one icon 1a is output, a specific touch can be additionally applied consecutively after the second touch as illustrated in the third drawing of FIG. 5B. In more detail, when the second touch is a drag touch applied in a direction in which two fingers move away from each other, the specific touch can be a drag touch applied in a direction in which the two fingers move away from one another further from the point to which the second touch has been applied.

Thus, when the specific touch is applied in the direction in which the two fingers move away from one another further from each point to which the second touch applied, the controller 180 can control the touch screen 151 to additionally output an icon related to the one icon 1a.

Here, an icon related to a previously output icon can be an icon corresponding to an application similar to an attribute (for example, a type of an execution function corresponding to an application or a timing at which an application is used) of an application corresponding to the previously output icon) of an application corresponding to the previously output icon. In another example, when the previously output icon is an icon of an application corresponding to the highest priority level among applications related to the object information, the icon related to the previously output icon can be an icon of an application corresponding to a lower priority of the highest priority.

Thus, as illustrated in the third drawing of FIG. 5B, icons 1a', 1b', and 1c' related to the one icon 1a can be additionally output based on the specific touch applied consecutively after the second touch as illustrated in the third drawing of FIG. 5B. Also, the controller 180 can output the one icon 1a to a point adjacent to the region 20a' formed based on the second touch, and output the icons 1a', 1b', and 1c' to points adjacent to the region 20b' formed based on the specific touch.

Thereafter, when the specific touch is released and a touch is applied to one icon 1a' among the icons 1a, 1a', 1b', and 1c' output on the touch screen 151, an execution screen 35 of an application corresponding to the touch can be output on the touch screen 151.

In addition, the controller 180 can adjust the number of icons output additionally based on the length applied in the direction in which the specific touch is away. For example, when the specific touch is away by a first length from the second touch, an icon corresponding to a preset one can be output additionally, and when the specific touch is away by a second length further than the first length from the second touch, icons corresponding to two greater than the preset one can be additionally output.

Here, the number of icons additionally output according to the degree of becoming away can be variously set by the user. Thus, the user can be provided with an appropriate number of icons of an application related to a specific object according to a setting, and use the appropriate number of icons.

However, the feature that the number of icons additionally output based on the application of the specific touch and the feature that the number of icons output based on the length in which the specific touch has been applied is adjusted are not limited to only one object is included in one region of the screen information. That is, even when a plurality of objects are included in one region of the screen information, the output number of icons can be adjusted based on the specific touch, and the number of icons output first based on the second touch may also be set to one or more.

In addition, when an object is specified, the controller 180 can select an application related to the object by using object information extracted from the object. Here, when the application related to the object has not been installed in the mobile terminal 100, the controller 180 can provide information related to the application which has not been installed.

That is, referring to FIG. 5C, when the object 1 is specified based on a preset type of touch applied to the screen information 20 output on the touch screen 151, the controller 180 can search for an application related to the object 1 from the object information of the specified object 1. For example, the controller 180 can search for the application related to the object information extracted from the object 1 from an external server by using the wireless communication unit 110.

Also, when a specific touch is additionally applied consecutively after the second touch, the controller 180 can provide information regarding each application searched in relation to the object. For example, as illustrated in the second drawing of FIG. 5C, the specific touch can be a tap input consecutively applied to the point to which the second touch has been applied. However, the specific touch can be set to various types such as a drag input, or the like, consecutively applied after the second touch.

Thus, based on the application of the specific touch, the controller 180 can output a specific screen 20b including the information regarding all the types of applications searched in relation to the object. For example, as illustrated in the third drawing of FIG. 5C, the controller 180 can output the specific screen 20b to one region of the screen information 20 and include icons 1a, 1b, 1c, and 1d corresponding to each of all the types of applications in the specific screen 20b.

Also, the controller 180 can differentiate an application installed in the mobile terminal 100 and an application not installed in the mobile terminal 100 among the all the types of applications. Also, the controller 180 can control the touch screen 151 to output guide information 1d' regarding installation of the icon 1d together in relation to the icon 1d of the application not installed in the specific screen 20b.

Thereafter, based on the touch applied to the guide information 1d', as illustrated in the fourth drawing of FIG. 5C, the controller 180 can control the touch screen 151 to output an execution screen 36 of executing installation of the icon 1d. Thus, the user can be provided with convenience of immediately installing an application related to the object and using the installed application by simply specifying the object even though the application has not been installed in the mobile terminal 100.

Similarly, the feature (that is, the feature of providing information regarding all the types of applications related to the object) included in FIG. 5C may also be applied to when a plurality of objects are included in one region of screen information, as well as to when one object is included in one region of the screen information.

Alternatively, when a plurality of objects are included in one region of the screen information, the controller 180 can designate different objects within one region of the screen information specified based on the first and second touches at a time or may change selection of the previously specified object.

Next, FIGS. 6A an 6B are views illustrating embodiments related to specifying at least a portion of a plurality of objects included in a region of screen information. First, referring to FIG. 6A, when screen information 26 of an image is output on the touch screen 151, as illustrated in the first and second drawing of FIG. 6A, the first touch can be applied to one point of the screen information 26. Also, as illustrated in the third drawing of FIG. 6A, when the second touch is applied consecutively after the first touch, the controller 180 can specify a region between the one point and the point from which the second touch has been released, as one region of the screen information.

If a plurality of objects are included in one region 26a of the screen information, the controller 180 can specify at least one object among the plurality of objects based on at least one position to which the first touch and the second touch have been applied. For example, the controller 180 can specify an object corresponding to a position of a point to which the first touch has been applied among a plurality of objects included in one region of the screen information. That is, as illustrated in the third drawing of FIG. 6A, the controller 180 can specify an object 6 corresponding to a position of one point to which the first touch has been applied. Here, the controller 180 can display the specified object 6 such that the specific object 6 is differentiated from the other objects included in the one region 26a of the screen information.

Also, the controller 180 can analyze object information corresponding to the specified object 6. If the object information of the specified object 6 is face image information, the controller 180 can recognize a specific person through analysis of the face image. Also, as illustrated in the fourth drawing of FIG. 6A, the controller 180 can search for information of the specific person or may output execution icons 6a and 6b of an application performing communication with a terminal corresponding to the specific person on the touch screen 161.

Thus, when the execution icons 6a and 6b corresponding to the specified object 6 are output, a specific touch can be applied to a different object included in one region 26a of the screen information. For example, the specific touch can be a long touch applied for a preset period of time or longer, a tap touch slightly tapping, or a simple touch.

In this instance, the controller 180 can specify the different object corresponding to the position of the point to which the specific touch has been applied, and extract object information corresponding to the different object. Also, the controller 180 can select new applications through analysis of object information extracted to corresponding to the different object.

Also, based on releasing of the specific touch, the controller 180 can output an execution icon of the application related to the different object on the touch screen 151. That is, as illustrated in the fifth drawing of FIG. 6A, the execution icons 6a and 6b related to the previously specified object 6 can be changed into execution icons 7a and 7b of an application related to the different object 7. Thus, when an object different from the user intention is specified in one region of the screen information, the user can change the specific object by using a specific touch, rather than applying the preset type of touch newly.

In addition, as illustrated in FIG. 6B, when the screen information 27 is output on the touch screen 151, the first and second touches can be applied to the second and third drawings of FIG. 6B. In this instance, the controller 180 can specify one region of the screen information formed based on the preset type of touch.

If a plurality of objects are included in one region 27a of the screen information, the controller 180 can specify all of the plurality of objects. That is, as illustrated in the fourth drawing of FIG. 6B, the controller 180 can specify both the first object (person) and the second object (thing) in the one region 27a of the screen information.

Thus, when a plurality of objects within the one region 27a of the screen information are specified, the controller 180 can extract and analyze object information corresponding to each of the plurality of objects. In this instance, based on the analysis of the object information corresponding to the first object, the controller 180 can select an application related to the first object among the at least one application. Also, based on the analysis of the object information corresponding to the second object, the controller 180 can select an application related to the second object among the at least one application.

The controller 180 can select an application commonly included in the application selected in relation to the first object and an application selected in relation to the second object. Also, as illustrated in the fourth drawing of FIG. 6B, the controller 180 can control the touch screen 151 to output execution icons 8a, 8b, and 8c of the commonly included application.

Here, when a touch is applied to any one execution icon 8a, an execution screen 28 of an application corresponding to the one execution icon 8a can be output as illustrated in the fifth drawing of FIG. 6B. Also, the controller 180 can include the information obtained through the analysis of the object information corresponding to each of the first and second objects in the execution screen 28 of the application and output the obtained information.

Thus, when a desired application is intended to be executed by combining a plurality of objects included in the screen information output on the touch screen 151, the user can apply the preset type of touch such that all of the plurality of objects are included. Further, after the one region of the screen information is specified by the preset type of touch, when a specific touch (for example, an input of dragging the dotted line portion indicating one region of the screen information) is applied, a range of one region of the screen information can be changed. Thus, the user can specify various objects according to a position and range to which the preset type of touch is applied, and can be additionally provided with convenience of changing or adding a specific object by applying a specific touch.

In addition, the at least one application may include an application that can be executed on the assumption that a preset authentication function is performed. For example, an application of a secret memo or album that can be checked by only an authorized user, a payment application performing a payment function, a messenger application that can be executed based on preset identification information of the user can be included in the application.

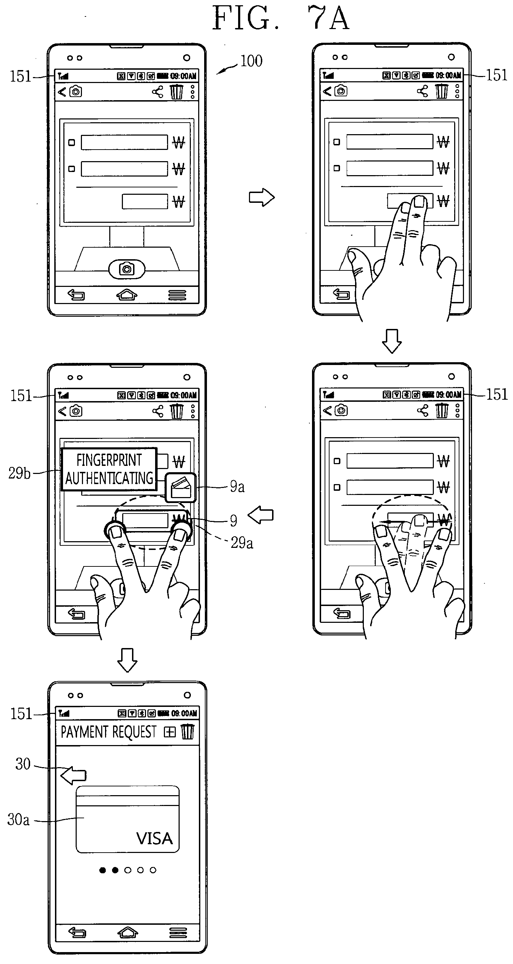

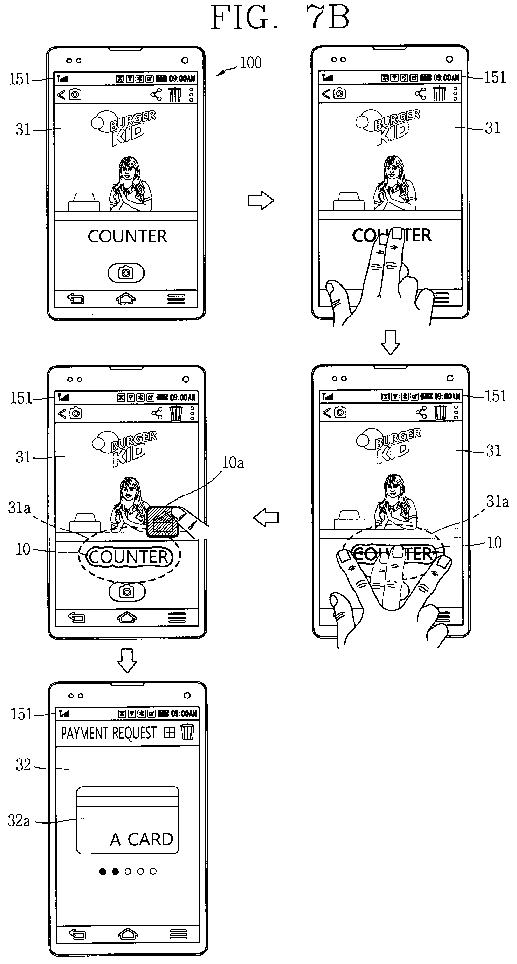

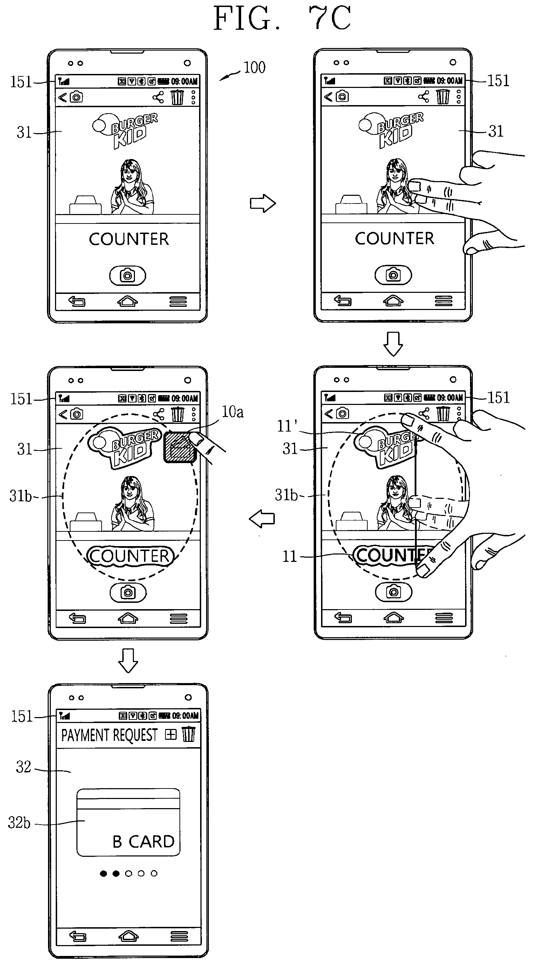

An embodiment related to outputting an execution icon of an application related thereto will now be described. In particular, FIGS. 7A, 7B, and 7C are views illustrating embodiments related to when an execution icon of an application on the premise of performing a preset authentication function is output.

First, referring to FIG. 7A, a preview screen captured by the camera 121 is output on the touch screen 151, and as illustrated in the second and third drawings of FIG. 7A, one region of the preview screen can be specified by the preset type of touch. The controller 180 can extract object information of an object included in the specified one region and analyze the extracted object information.

For example, the controller 180 can analyze a meaning of the extracted object information. In this instance, the controller 180 can analyze the meaning of the extracted object information by analyzing images of other objects included in the preview screen together. That is, as illustrated in the third drawing of FIG. 7A, when the preview screen includes an image regarding a monitor of a counter and the object information is analyzed as price information, the controller 180 can select an application of a payment function as an application related to the object information.

Thus, when the application of the payment function is selected, the controller 180 can output an execution icon 9a of the application of the payment function to a position adjacent to the specified one region 29a when the preset touch is maintained. Also, while the preset touch is being maintained, the controller 180 can obtain fingerprint information and perform a preset authentication function by using the fingerprint information.

If the preset fingerprint information and the obtained fingerprint information are identical, the controller 180 can control the touch screen 151 to output an execution screen 30 of an application corresponding to the execution icon 9a based on releasing of the preset type of touch as illustrated in the fifth drawing of FIG. 7A. Also, when the preset authentication function is successfully performed, an image 30a of a payment card corresponding to the fingerprint information can be included in the execution screen 30 of the application when payment is available.

In addition, when the preset authentication function based on the fingerprint information fails, the controller 180 can maintain outputting of the execution icon 9a even though the preset touch is released. Here, when the user touches the execution icon 9a, the preset authentication function for executing the application of the payment function can be performed again.

Thus, the controller 180 can analyze types of the screen information including the object together and select an application more appropriate for the situation. In addition, even though the same object of the same screen is extracted, the controller 180 can output an execution icon of a different type of application according to a time or a location to which the preset type of touch has been applied or a use pattern of the user.

Also, even though an execution icon of the application of the same payment function is output, the controller 180 can output an execution screen of the application differently according to specified object information. That is, referring to FIG. 7B, when a preview screen 31 captured by the camera 121 is output on the touch screen 51, as illustrated in the second and third drawings of FIG. 7B, one region 31a of the preview screen 31 can be specified based on a preset type of touch.

The controller 180 can analyze image information of the object 10 included in the one region 31a. As illustrated in the third drawing of FIG. 7B, when the object 10 is image information of a specific character, the controller 180 can extract the specific character and analyze a meaning of the extracted specific character. And, the controller 180 can select an application in relation to the meaning of the specific character.

If the application related to the specific character is an application of the payment function, as illustrated in the fourth drawing of FIG. 7B, an execution icon 10a of the application of the payment function can be output. Also, as illustrated in the fifth drawing of FIG. 7B, an execution screen 32 of an application including a registered payment card image 32a can be output.

Alternatively, as illustrated in the second and third drawings of FIG. 7C, a range of the specified region 31b can be changed in the preview screen 31, and a plurality of objects 11 and 11' included in the specified region 31b can be specified. Also, the controller 180 can extract object information corresponding to each of the specified objects 11 and 11' and analyze the extracted object information.

In more detail, as illustrated in the third drawing of FIG. 7C, it can be recognized that the meaning of the character corresponding to the specified first object 11 is a counter which performs counting. Also, it can be recognized that the meaning of the character corresponding to the specified second object 11' is a specific brand of a name of a store. Also, the controller 180 can analyze the image included in the preview screen 31 together and recognize a situation in which the user currently pays a bill in a specific store.

Thus, as illustrated in the fourth drawing of FIG. 7C, the controller 180 can output an execution icon 10a of the application of the payment function on the touch screen 151. Also, as illustrated in the fifth drawing of FIG. 7C, the controller 180 can output an execution screen 32 of the application including a previously registered payment card image 32b based on a touch applied to the execution icon 10a.

Here, the controller 180 can output an execution screen including a card image corresponding to a card most appropriate for performing the payment function based on the analysis of the first and second objects. That is, the controller 180 can select a payment card most appropriate for the current situation of the user when the application is executed, by using pieces of information collected for analyzing the object information extracted from the screen information, and control the touch screen 151 to output an execution screen including a corresponding card image.

In other words, in FIG. 7B, when a situation in which payment is required is determined, the controller 180 can output an execution screen simply including an image of the previously registered card on the touch screen 151. However, in FIG. 7C, when the controller 180 analyzes characteristics of a location in which payment is required through analysis of the extracted object information, the controller 180 can additionally analyze the payment information related to the location. That is, when payment is performed in the location, the controller 180 can search for card advantages for accumulation or a discount benefit, and when the searched card has been registered in the mobile terminal 100, the controller 180 can control the touch screen 151 to output an execution screen including an image of the searched card.

Thus, when the user performs payment by using an application, the user can be provided with convenience of perform payment by using the card most appropriate for the current situation even without searching for a payment card by variously setting a selection rage of an object.

When an application related to the object information is in plurality, the controller 180 can output all of execution icons of the plurality of applications or selectively output the applications. That is, the user can be provided all of the execution icons of the applications related to the object information through a user setting, and can be selectively provided with only execution icons regarding some of the applications.

When execution icons of the plurality of applications are selectively output, the controller 180 can set priority for the plurality of applications based on a preset reference. For example, the preset reference can be history information regarding execution of an application by the user such as execution frequency or an execution number regarding the at least one application stored in the memory 170 or a type of an application executed within a preset period.

In another example, the preset reference can be information related to the current situation such as a time or a location to which the preset type of touch has been applied or a type of the screen information. Based on the preset reference, the controller 180 can set priority for the plurality of applications and selectively output the execution icons of the applications according to the priority.

Next, FIGS. 8A and 8B are views illustrating embodiments related to selectively outputting an execution icon of an application related to object information. First, referring to FIG. 8A, the screen information 20 is output on the touch screen 151, and the object 1 included in the specified one region 20a can be specified based on the preset type of touch. In this instance, the controller 180 can select some of the at least one application based on analysis of object information corresponding to the object 1.

For example, as illustrated in the first drawing of FIG. 8A, when the controller 180 determines that a meaning of the object 1 is a name of a theater of a specific brand through analysis of the object information, the controller 180 can select an application by using name information regarding the theater. For example, an application for searching for name information regarding the theater, an application for checking movie showing information in a theater corresponding to the name, a map application for checking a distance to the theater from the current location, and an application for checking a benefit that can be provided by the theater or event information can be selected by the controller 180.

When a plurality of applications are selected in this manner, the controller 180 can analyze history information regarding execution of an application by the user. For example, the controller 180 can analyze whether the user has frequently used the search application, whether the user has frequently reserved movie tickets by using a payment application, whether the user has recently searched for a location through the map application, and the like.

Also, the controller 180 can analyze the current situation in consideration of whether screen information output on the touch screen 151 is a Web browsing screen, a screen captured by the camera, or a previously stored image screen, and the current location and time. In consideration of these conditions, the controller 180 can set priority for the plurality of applications. For example, the controller 180 can set an application having the highest probability that the user can execute, to have the highest priority in consideration of an application most appropriate for the current situation or a use pattern of the user.

As illustrated in the first drawing of FIG. 8A, when the preset type of touch is being maintained, the controller 180 can control the touch screen 151 to output an execution icon 1a of the application set to have the highest priority. In this state, the user can apply a specific touch (for example, a slide touch, or the like, that is, a touch input applied with two fingers to maintain an open state, gather the two fingers, and subsequently open the two fingers again) consecutively after the preset type of touch, as illustrated in the second and third drawings of FIG. 8A. In this instance, as illustrated in the third drawing of FIG. 8A, the controller 180 can control the touch screen 151 such that the execution icon 1a is changed to the execution icon 1b of an application set to have the second highest priority.

Also, when the specific touch is released, the controller 180 can control the touch screen 151 to output an execution screen 33 of an application corresponding to an execution icon output at a time when the specific touch is released as illustrated in the fourth drawing of FIG. 8A. Thus the user can be provided with an execution icon of an application most appropriate for his or her use pattern or the current situation, and when the application is different from his or her intention, the user can easily select a different execution icon by applying a touch additionally.

Alternatively, as illustrated in the first drawing of FIG. 8B, when the preset type of touch is released, the controller 180 can control the touch screen 151 to output the execution icon 1a of the application set to have the highest priority. As illustrated in the first and second drawings of FIG. 8B, the user can be provided with the execution icon 1b set to have the next-highest priority based on a specific touch (drag touch applied in one direction0.

That is, in this instance, the execution icon 1a of the application set to have the highest priority is first output, but when a user's specific touch is additionally applied, the execution icon 1b set to have the next priority can be provided together with the execution icon 1a of the application set to have the highest priority.

Also, referring to the second and third drawings of FIG. 8B, when the specific touch is additionally applied again, an execution icon 1c of the application set to have priority lower than the second highest priority can be additionally output on the touch screen 151. In this state, as illustrated in the third drawing of FIG. 8B, when a touch is applied to at least two execution icons 1b and 1c among the plurality of execution icons 1a, 1b, and 1c output on the touch screen 151, the controller 180 can execute the applications respectively corresponding to the at least two execution icons 1b and 1c to which the touch has been applied.

Also, as illustrated in the fourth drawing of FIG. 8B, the controller 180 can control the touch screen 151 to output the execution screens of the applications respectively corresponding to the at least two execution icons 1b and 1c together. Thus, the user can be provided with convenience of selectively executing the applications respectively corresponding to the two or more execution icons simultaneously by using various touch schemes.

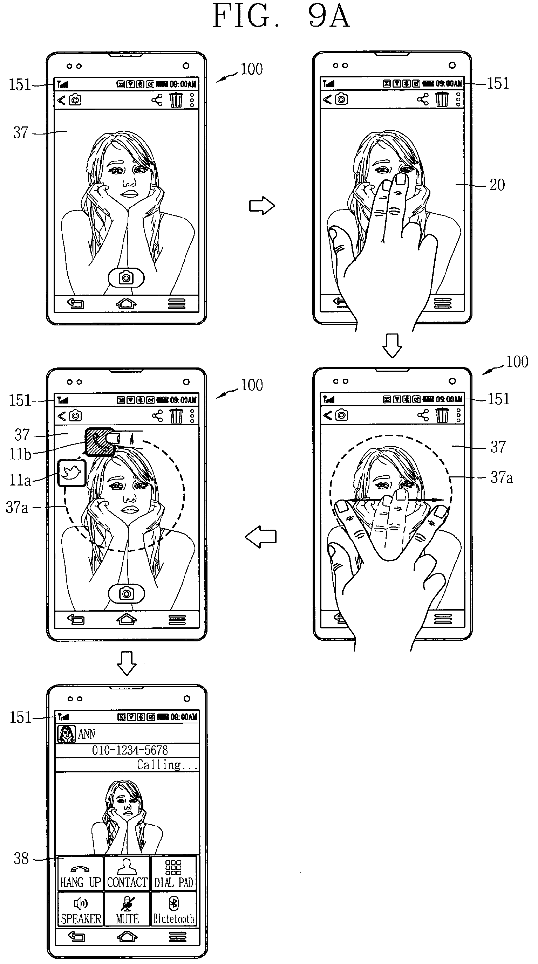

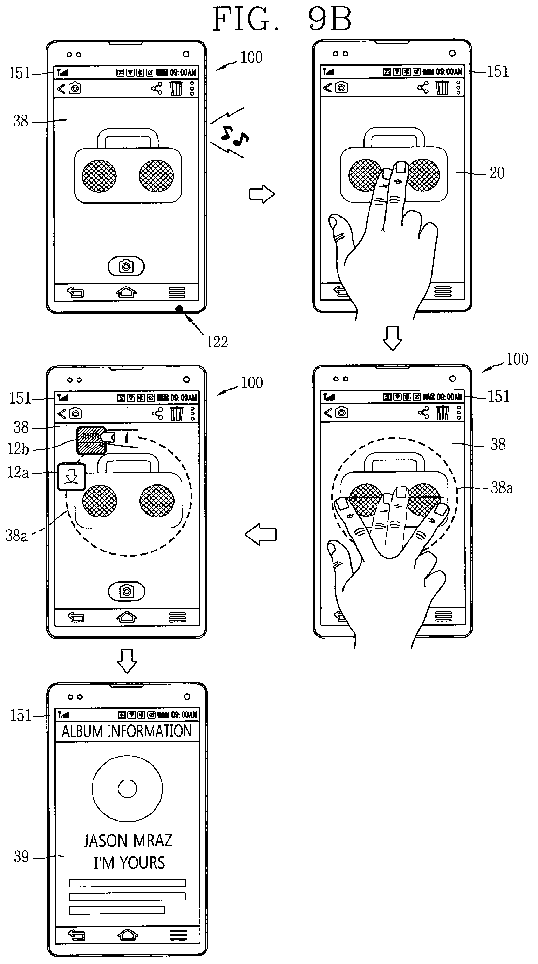

Hereinafter, another embodiment to which the control method according to an embodiment of the present disclosure is applied will be described. In particular, FIGS. 9A and 9B are views illustrating embodiments related to execution of an application related to an object by using extracted object information.

First, referring to FIG. 9A, when a captured preview screen 37 regarding a specific person is output on the touch screen 151, as illustrated in the second and third drawings of FIG. 9A, first and second touches can be applied to the preview screen 37. The controller 180 can specify one region 37a of the preview screen 37 and specify an object included in the one region 37a based on the first and second touches.

Also, the controller 180 can select an application related to the object based on object information extracted from the object. When face image information of a specific person is extracted as the object information, the controller 180 can search for information of the specific person corresponding to the face image. For example, the controller 180 can collect information of the specific person by using pieces of image information previously stored in the mobile terminal 100 or information collected through wireless communication from an external server.

When the specific person is determined, the controller 180 can output icons 11a and 11b of applications related to the specific person as illustrated in the fourth drawing of FIG. 9A. For example, the application related to the specific person may include an application for connecting a call to an external terminal corresponding to the specific person and a messenger application related to identification information corresponding to the specific person.

When the icon 11a of the application for a call connection is selected as illustrated in the fourth drawing of FIG. 9A, the controller 180 can extract information of the external terminal corresponding to the specific person from the information collected for determining the specific person. Also, the controller 180 can execute a function for connecting a call to the external terminal by using the extracted identification information of the external terminal. Thus, as illustrated in the fifth drawing of FIG. 9A, an execution screen 38 of the call connection to the external terminal can be output on the touch screen 151.

Thus, when the icon of the application related to the object is selected by utilizing the pieces of information related to the specific object, the function desired by the user can be immediately executed, thus providing convenience to the user. Also, the controller 180 can collect object information related to the object by using the microphone 122.

That is, as illustrated in FIG. 9B, a sound event can be generated by an external sound source device, and a captured preview screen 38 of the sound source device can be output on the touch screen 151. In this instance, as illustrated in the second and third drawings of FIG. 9B, the sound source device can be specified as an object based on a preset type of touch applied to the preview screen 38.

Here, the controller 180 can extract image information of the specified object from the screen information 38. Also, the controller 180 can collect additional information related to the specific object through analysis of the image of the specified object. For example, when the image of the specified object is an object generating a sound source like a radio set, the controller 180 can control the microphone 1122 to collect sound event information related to the sound source generated by the object.

Also, the controller 180 can search for the sound event information input through the microphone 122 by using an external server. When the sound event is specific music information, the controller 180 can select an application for search for or downloading the specific music information, as an application related to the specific object.

Thus, as illustrated in the fourth drawing of FIG. 9B, icons 12a and 12b of the application related to the specific object can be output, and as illustrated in the fifth drawing of FIG. 9B, an execution screen 39 of an application corresponding to the one icon 12b can be output on the touch screen 151 based on a user selection. Here, the controller 180 can execute the application corresponding to the one icon 12b by utilizing the information collected for analyzing the specific object.

Thus, when an object having certain characteristics (for example, an object obviously performing a function of generating a sound or generating vibrations) is specified, information related to the characteristics of the object, as well as information regarding the object itself, can be used in selecting an application. Thus, the user can execute an application more appropriately corresponding to his or her intention.

Further, the control method according to an embodiment of the present disclosure can immediately execute various applications by capturing an image of an object related to an icon image of an application and specifying the object. For example, a schedule application can be immediately executed by capturing an image of a calendar, a weather application can be immediately executed by capturing an image of a cloud or sky, or an alarm application can be immediately executed by capturing an image of a clock. Thus, in order to execute a specific application, the user can immediately execute the desired application without applying touches several times or performing searching.

The mobile terminal according to an embodiment of the present disclosure may specify information based on a preset type of touch applied to screen information currently being output on the touch screen, and immediately output an execution icon of an application related thereto. Thus, the user can be immediately provided with an execution icon of an application desired by the user by simply applying a preset type of touch no matter which screen information is output.

Also, the mobile terminal according to an embodiment of the present disclosure may provide an execution icon of an application most appropriate for the current situation in which the information is specified, and thus, the user can omit a plurality of steps of directly searching for an application most appropriate for the current situation, selecting a menu, and applying an input to output an execution screen.

Various embodiments can be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium can be realized in the form of a carrier wave (for example, a transmission over the Internet). The processor may include the controller 180 of the mobile terminal.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein can be combined in various ways to obtain additional and/or alternative exemplary embodiments.

As the present features can be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100) comprising:
a touch screen (151) configured to display screen information; and
a controller (180) configured to:
in response to a preset type of touch applied to the screen information, the preset type of touch designating a region of the displayed screen information including at least one object, extract object information from the designated region of the displayed screen information and display an execution icon of an application related to an object included in the designated region of the displayed screen information.

2. The mobile terminal of claim 1, wherein the at least one object is included in at least one of image information and text information included in the designated region.

3. The mobile terminal of claim 2, wherein when the at least one object included in the image information corresponds to a specific character or characters, the controller is further configured to recognize a meaning of the specific character or characters and execute the application based on the recognized meaning.

4. The mobile terminal of any one of claims 1 to 3, further comprising:
a wireless communication unit (110) configured to perform wireless communication with an external server,
wherein the controller (180) is further configured to search the external server for information related to the at least one object via the wireless communication unit (110).

5. The mobile terminal of any one of claims 1 to 4, wherein when the application is not is not installed in the mobile terminal, the controller (180) is further configured to display guide information on the touch screen regarding installation of the application.

6. The mobile terminal of any one of claims 1 to 5, wherein the preset type of touch includes a first touch and a second touch designating the region of the displayed screen information.

7. The mobile terminal of claim 6, wherein when a plurality of objects are included in the designated region of the displayed screen information, the controller is further configured to display a corresponding execution icon of an application related to a first object included in the plurality of objects based on at least one position among a point to which the first touch has been applied and a point to which the second touch has been applied.

8. The mobile terminal of claim 7, wherein the controller is further configured to:
display the corresponding execution icon in response to a release of the preset type of touch, and
display another execution icon of another application related to another object included in the plurality of objects in response to a specific touch applied to the other object.

9. The mobile terminal of claim 8, wherein the controller is further configured to change the execution icon into the other execution icon in response to a release of the specific touch applied to the other object.

10. The mobile terminal of any one of claims 1 to 9, wherein when the application corresponds to performing a preset authentication function, the controller is further configured to obtain fingerprint information while the preset type of touch is being maintained on the touch screen, and perform the preset authentication function using the obtained fingerprint information.

11. The mobile terminal of claim 10, wherein when the fingerprint information matches previously stored fingerprint information, the controller is further configured to display an execution screen corresponding to the application based on a releasing of the preset type of touch.

12. The mobile terminal of any one of claims 1 to 11, wherein when the application includes a plurality of applications, the controller is further configured to set respective priorities for the plurality of applications based on a preset reference, and display a highest priority execution icon of a highest priority application set to have the highest priority among the plurality of applications.

13. The mobile terminal of claim 12, wherein the preset reference is related to at least one of an execution frequency or an execution number of the application, a type of the application executed within a preset period, a time and a location to which the preset type of touch was applied, and a type of the screen information.

14. The mobile terminal of claim 12, wherein the controller (180) is further configured to:
change the highest priority execution icon into a second highest priority execution icon corresponding to a second highest priority application in response to a specific touch applied consecutively after the preset type of touch, and
display an execution screen of the second highest priority application in response to a releasing of the specific touch.

15. The mobile terminal of any one of claims 1 to 14, wherein the execution icon includes a first execution icon and a second execution icon respectively corresponding to a first application and a second application icon, and
wherein the controller (180) is further configured to display first and second execution screens for the first and second applications, in response to touches applied to the first and second execution icons.
